# EUROPEAN PATENT SPECIFICATION

(11) **EP 4 479 215 B1**
(45) Date of publication and mention of the grant of the patent: **03.12.2025**
(21) Application number: 23704357.5
(22) Date of filing: 15.02.2023
(51) Int. Cl.: B23K 26/03, B23K 26/38, B23K 31/00, B23K 31/12

(54) **METHOD AND DEVICE FOR LASER CUTTING A WORKPIECE**
VERFAHREN UND VORRICHTUNG ZUM LASERSCHNEIDEN EINES WERKSTÜCKS
PROCÉDÉ ET DISPOSITIF DE DÉCOUPAGE LASER D'UNE PIÈCE

(30) Priority: 17.02.2022 EP 22157252
(43) Date of publication of application: 25.12.2024
(73) Proprietor: Bystronic Laser AG, 3362 Niederönz (CH)
(72) Inventor: LUEDI, Andreas, 3400 Burgdorf (CH); BADER, Roland, 4933 Ruetschelen (CH); HERWIG, Patrick, 01237 Dresden (DE)
(74) Representative: Patentanwälte Geyer, Fehners & Partner mbB
(86) International application number: PCT/EP2023/053770
(87) International publication number: WO 2023/156465

(56) References cited:
- DE-A1- 10 146 945
- DE-A1- 102013 218 421
- US-B2- 10 565 734
- ILLGNER KLAUS ET AL: "Lightfield imaging for industrial applications", SPIE PROCEEDINGS; [PROCEEDINGS OF SPIE ISSN 0277-786X], SPIE, US, vol. 11525, 8 November 2020 (2020-11-08), pages 1152526 - 1152526, XP060134781, ISBN: 978-1-5106-3673-6, DOI: 10.1117/12.2580328

## Description

The invention relates to a method for laser cutting a workpiece, a device for laser cutting a workpiece, and a computer program product.

In a method for laser cutting a workpiece and a device for laser cutting a workpiece, the cutting quality, cutting speed and machine autonomy are regarded as important considerations. If the cutting process can be monitored well, the device for laser cutting can be improved in all three essential aspects. Accordingly, the monitoring of the cutting process has gained importance in recent years. Known devices for laser cutting are often equipped with photodiodes and sometimes with cameras, which enable real-time monitoring of the machining process as point information or two-dimensional area information. For modern devices for laser cutting, comprehensive process sensor technology is increasingly used, using which cutting breakage and degradations in quality, e.g. rough cutting edges, burr adhesion and slag formation on the cut workpieces can be well detected. However, degradations in quality do not occur over the entire thickness of the cut workpiece, but in individual planes, such as burrs on the underside of the cut workpiece.

Some cutting machines allow for observation of the cutting process with a photodiode provided, for example, in a cutting head. This provides a point information with spatial integration over the observed location. However, such monitoring can only detect excessive annealing or plasma cutting. There are also known cutting process observations in which cameras are used. With the help of a camera, a two-dimensional image of the process can be produced, which, compared to the photodiode, provides more information about the machining process and allows the cutting performance to be monitored and optimized.

Characteristic for the cutting condition and for the cutting quality, also referred to as the quality of the cut, is the process radiation with the flare, the generated kerf with the scoring occurring at its cutting edge and the generated cutting front. Studies are known that determine the three-dimensional geometry of the cutting front by observing polarization states, cf. M. Sawannia et al, "Determination of the 3D-Geometry of Cutting Fronts with High Temporal Resolution," LiM 2019. The device or apparatus used for this purpose is very large. Further disadvantageous is the fact that the observation is not real-time capable, since the computationally intensive reconstruction of a cutting front takes several minutes. In addition, the cutting front observation must be made off-axis, i.e., from the side, which makes the observation directionally dependent.

DE102013218421 A1 discloses a device and a method for observation of a cutting process. US10565734 B2 describes an image capture system including a plurality of image sensors arranged in a pattern. Illgner Klaus, et al. "Lightfield Imaging for Industrial Applications" SPIE Proceedings, US, vol. 11525 pages 1152526 1 to 12, November 8, 2020 describe a lightfield imaging system. DE10146945 A1 is directed to a measuring arrangement and method.

It is the object of the invention to provide a method and a device for laser cutting of a workpiece, which enable an informative monitoring of the cutting process and the cutting quality.

This object is achieved by a method for laser cutting a workpiece according to claim 1, a device for laser cutting a workpiece according to claim 6, and a computer program product according to claim 13.

One embodiment relates to a method for laser cutting a workpiece, by means of a device for laser cutting with a cutting head; comprising the steps of irradiating the workpiece with a machining laser beam, cutting the workpiece in a cutting direction and generating a process zone and in particular generating a kerf; and acquiring 1 to n images of the process zone in at least a part of an illumination light reflected from the process zone and/or in at least a part of a process light generated by an interaction of the machining laser beam with the workpiece and emitted from the process zone by means of an image acquisition device; wherein each of the 1 to n images is acquired as an array of simultaneous partial images T₁ to Tₘ, wherein each or a plurality of the partial images T₁ to Tₘ of the array is distinguished by a. an optical feature of an acquisition angle to the process zone, and at least one optical feature selected from b. a focal length of an optic of the image acquisition device in the direction of the process zone, and c. a polarization, in particular a polarization angle and/or polarization degree, of the acquired process light and/or the acquired illumination light; and at least one cutting quality feature is determined from the array of partial images T₁ to Tₘ of at least one of the 1 to n images.

In the method, an array of simultaneous partial images T₁ to Tₘ, hereinafter also referred to as partial images, which differ in at least two optical features, is obtained per image by means of the image acquisition device. Thus, each image of the 1 to n images can be obtained as an image acquisition data field. Each image and/or image acquisition data field contains information resulting from the different optical features. In this way, differentiated image acquisition data can be obtained about the process zone. The 1 to n images can be acquired one after the other in time. In the method, an array of partial images is obtained per image, which differ in the acquisition angle to the process zone. In a first variant of the method, an array of partial images is obtained per image, which differ in the focal length of an optic of the image acquisition unit in the direction of the process zone. By a second variant of the method, an array of partial images is obtained per image, which differ in the polarization of the acquired process light and/or the acquired illumination light. A further variant of the method generates an array of partial images per image that differ in a combination of three of the optical features mentioned. All variants of the method can be used to obtain information from the process zone and thus be used to determine cutting quality features. Thereby, in all variants of the method, the information content in the acquired images is optimized with respect to the cutting quality. Using the method, this information can be obtained in a spatially and/or temporally differentiated manner. With the help of the information obtained from the process zone, degradations in quality can be detected and subsequently remedied in the best possible way by adjusting the process parameters for the laser cutting. Degradations in quality can further be detected over the entire thickness of the cut workpiece, e.g. in individual planes, such as burrs on the underside of the cut workpiece. The method can be used in laser cutting of a workpiece containing, for example, at least one metal in its workpiece material. In this way, for example, the geometry of the kerf and/or the process light, also referred to as process radiation, can be characterized. Once the geometry of the kerf and the process radiation have been characterized, the cutting condition can be derived and the laser cutting can be optimally controlled (cutting control). This allows the cutting quality and/or cutting performance to be monitored and optimized. Furthermore, an exceptionally stable and accurate cutting quality estimation and/or cutting control can be realized. The cutting quality estimation and/or cutting control can further be performed in real time during laser cutting. A plurality of acquisition angles can be acquired in a range of 0° to 20°, preferably 0° to 15°, more preferably 0° or 0.5° to 10°, further preferably 5° to 20°.

In all or some embodiments and variations thereof, the at least one cutting quality feature can be selected from: Scoring of the cutting edge, roughness of the cutting edge, waviness of the cutting edge, perpendicularity of the cutting edge, slag, in particular slag residue in the kerf or slag residue on the underside of the cutting edge, burr adhesion to the cut workpiece, in particular burr measured as burr height and/or burr volume on the underside of the cutting edge, plasma formation, tear-off, development of spatial and/or local cutting quality features over time, variance of spatial and/or local cutting quality features over time, and any combination thereof. In all or some embodiments and variations, three-dimensional information can be included in the images and/or partial images. The at least one cutting quality feature can result from a molten mass of the workpiece material, also referred to as a molten bath, formed during laser cutting and adhering to the workpiece.

In the method, the 1 to n images are acquired with at least one radiation intensity sensor of the image acquisition device, which at least one optical means is or will be connected upstream of, the optical means being
- an array of microlenses arranged side by side for acquiring the reflected illumination light and/or the process light from a plurality of individual acquisition angles; or
- an array of mirrors for acquiring the reflected illumination light and/or the process light from a plurality of individual acquisition angles under kaleidoscopic multiple reflection; and
at least one element selected from
- an array of microlenses (111) arranged side by side being for acquiring the reflected illumination light (305) and/or the process light (105) with a plurality of individual focal lengths; and
- an array of micropolarization filters arranged side by side for acquiring the reflected illumination light and/or the process light with a plurality of individual polarizations.

The radiation intensity sensor can be designed to be planar. In the array of microlenses arranged side by side, the microlenses can be arranged side by side in a planar manner. In the array of micropolarization filters arranged side by side, the micropolarization filters can be arranged side by side in a planar manner. The array of microlenses arranged side by side can contain the same and/or different microlenses. In embodiments and variations thereof, the radiation intensity sensor can be sensitive to illumination light and/or process light.

In this way, an array of partial images with a plurality of individual acquisition angles and with a plurality of individual focal lengths and/or with a plurality of individual polarizations can be acquired per image. Each image of the 1 to n images can be obtained as a sensor data field generated with the radiation intensity sensor. Each image and/or sensor data field contains information resulting from the different optical features. This enables a differentiated image acquisition of the process zone and/or the acquisition of differentiated information about the process zone and about the cutting quality. The radiation intensity sensor can be designed as a planar sensor. For example, the sensor can be designed as a CMOS chip, a CCD chip, a two-dimensional diode array, or a one-dimensional diode array, also referred to as a line sensor. In the case of a one-dimensional diode array, it can be oriented transverse to the cutting direction.

The method can include calibration of the at least one optical means. The array of mirrors for acquiring the reflected illumination light and/or process light from a plurality of individual acquisition angles under kaleidoscopic multiple reflection has the advantages of lower manufacturing cost and easier calibration while providing the same acquisition angles compared to the array of microlenses.

In the method, the array of microlenses arranged side by side, the array of mirrors for acquisition under kaleidoscopic multiple reflection and/or the array of micropolarization filters arranged side by side are or will be connected spatially in series upstream of the radiation intensity sensor in the propagation direction of light. By spatially connecting these optical means in series, a combination of two or three of the optical features mentioned can be realized. The array of microlenses arranged side by side, the array of mirrors for acquisition under kaleidoscopic multiple reflection and/or the array of micropolarization filters arranged side by side can further be connected upstream of the radiation intensity sensor in a temporally alternating manner. Thus, depending on the requirements, one of the optical means can be connected individually or several of the optical means can be connected spatially in series upstream of the radiation intensity sensor in the propagation direction of the light. The light includes the at least one part of the illumination light reflected from the process zone and/or the at least one part of the process light generated by an interaction of the machining laser beam with the workpiece and emitted from the process zone.

In the method, the 1 to n images can be acquired with at least one temperature-calibrated radiation intensity sensor and the radiation temperature of the process light can be identified. In this way, the 1 to n images can be used to determine a temperature distribution over and/or in the process zone, e.g. a temperature field over the three-dimensional geometry of the process zone. Furthermore, based on the 1 to n images acquired in this way, a velocity distribution of a molten bath in the process zone can be obtained, from which differential images of the kerf geometry can be generated, for example.

In the method, the at least one cutting quality feature can be determined based on at least one element selected from a geometry of the process zone, in particular a geometry of the kerf, a temperature distribution over and/or in the process zone, in particular over and/or in the kerf, a velocity distribution of a molten bath in the process zone, in particular in the kerf and/or along the kerf, and at least one differential image of the geometry of the process zone, in particular at least one differential image of the geometry of the kerf, as 3D information, also referred to as three-dimensional information, contained in the array of the partial images of at least one of the 1 to n images. The geometry of the process zone includes the geometry of the kerf and/or the geometry of a cutting front of the kerf. The velocity distribution of the molten bath can relate to the location-dependent flow velocity and/or the location-dependent stream velocity of the molten bath and/or of a molten component of the workpiece material contained in the molten bath.

In the method, an illumination light beam from an illumination device, particularly as the illumination light, can be directed onto the process zone. The machining laser beam and the illumination light beam can be directed at least partially coaxially, in particular in each case at an angle of essentially 90° to the workpiece surface, onto the process zone. During the acquisition of the 1 to n images, at least a part of the illumination light beam reflected from the process zone and/or at least a part of the process light can be acquired, which in each case extends coaxially with respect to the machining laser beam impinging on the process zone. In this way, the image acquisition can be realized at least partially coaxial with the processing laser beam and is thus compact and direction-independent.

In the method, partial images with an acquisition angle in a range of 0° to 20°, preferably between 0° and 15°, to the process zone can be selected, e.g. for an evaluation of the partial images. Partial images with the same and/or different acquisition angles can be selected. Furthermore, the array of microlenses and/or the array of mirrors can provide a plurality of acquisition angles in a range of 0° to 20°, preferably between 0° and 15°, to the process zone.

In embodiments of the method and/or device and in variations thereof, the acquisition angle to the process zone can be understood as an angle relative to a perpendicular to the workpiece surface. When a flat workpiece surface of a workpiece is cut, the acquisition angle can be understood as an angle relative to a perpendicular to the plane of the workpiece surface. If a curved workpiece surface of a workpiece is cut, the acquisition angle can be understood as an angle relative to a perpendicular to a tangential plane of the workpiece surface, in particular to a tangential plane at the point of incidence or in the area of incidence of the machining laser beam on the workpiece surface. In embodiments of the method and/or device and in variations thereof, the acquisition angle to the process zone can be defined together with an angle relative to the cutting direction, in particular with an azimuth angle to the cutting direction. In embodiments of the method and/or device and in variations thereof, in which the perpendicular to the workpiece surface coincides with an, in particular central, optical axis of the machining laser beam, the acquisition angle can be defined relative to the optical axis of the machining laser beam.

In all or some embodiments and variations thereof, the acquisition angle can be an angle in a range of 0° to 20°, preferably 0° to 15°, more preferably 0° or 0.5° to 10°, further preferably 5° to 20°. The acquisition angle can be selected and/or provided depending on the light beam optics and/or the optics of the image acquisition device and/or the type of laser cutting. Smaller acquisition angles, e.g. in the range of 0° to 5°, can be selected and/or provided for laser cutting performed as fusion cutting with, for example, N₂ as a cutting gas. Larger acquisition angles, e.g. in the range of 10° to 20°, can be selected and/or provided for laser cutting performed as flame cutting with, for example, O₂ as a cutting gas. This is due to the inclination of the cutting front relative to the perpendicular to the workpiece surface, wherein the inclination of the cutting front is shallower for flame cutting than for fusion cutting.

In the method, partial images having the same acquisition angle, focal length and/or polarization can be selected from the array of partial images T₁ to Tₘ of at least one of the 1 to n images to determine the cutting quality feature. For example, to determine a cutting quality feature developing over time, partial images acquired one after the other in time with the same acquisition angle and focal length can be selected. **In** this way, the progression of the laser cutting over time and/or the quality of the laser cutting developing over a period of time can be acquired and monitored, e.g. a scoring frequency.

Furthermore, the cutting quality feature can be determined, for example estimated, from the array of partial images T₁ to Tₘ from at least one of the 1 to n images with at least one neural network. For example, the neural network can learn at least one spatial cutting quality feature, for example scores of the cutting edge, and/or at least one cutting quality feature developing over time, for example a scoring frequency. The neural network can autonomously search for and select at least two suitable optical features, at least one image feature and/or at least one partial image feature for determining a particular cutting quality feature. It can also autonomously search for and select suitable optical features, one or more image features and/or one or more partial image features for the cutting quality estimation and/or cutting control. Due to the use of the neural network, no sophisticated special software is required for the determination of the cutting quality feature and/or for the cutting control. Furthermore, it is not necessary to reconstruct a three-dimensional geometry of the process zone from the 1 to n images, rather the neural network autonomously finds the information used to determine the cutting quality feature and/or estimate the quality. Three-dimensional information is contained in the images and/or partial images. This information can be extracted and/or processed by means of the at least one neural network with respect to at least one cutting quality feature. **In** some embodiments, the three-dimensional information is not reconstructed into a three-dimensional geometry of the process zone. **In** other embodiments, the three-dimensional information can additionally be reconstructed to determine and/or represent a three-dimensional geometry of the process zone.

Image features refer to features in the images that correlate with a cutting quality feature and/or its characteristics. Partial image features refer to features in the partial images that correlate with a cutting quality feature and/or its characteristics. One such feature can be, for example, a cooling trace of the lower cutting edge directly behind the process zone, which appears as an elongated region of medium extent on both sides of the kerf. The length of these two cooling regions correlates with the burr formation. In particular, depending on the inclination of the cutting edge, this image feature or partial image feature can be acquired at a slightly oblique acquisition angle and perpendicular to the cutting direction. The neural network autonomously finds the images and/or partial images with, for example, the most suitable acquisition angles and other optical features, i.e., the at least two optical features and/or the at least one image feature and/or the at least one partial image feature using which the burr formation can best be estimated.

Determining the cutting quality feature can include accessing at least one trained neural network with at least two of the optical features, at least one of the image features and/or at least one of the partial image features to compute a result for determining and/or estimating the cutting quality feature in question. During the training of the neural network, those optical features, image features and/or partial image features that are to be considered for the computation of the result can be identified automatically. The neural network can be trained on the partial images of one or more images. The neural network can be trained with training data prior to the productive quality monitoring. In doing so, the neural network can be presented with many images with known cutting quality features so that it learns which optical features, image features and/or partial image features are relevant to optimally estimate the sought cutting quality features. A separate neural network can be generated for each cutting quality feature. A user of the method can decide which cutting quality features should be monitored and/or to which cutting quality features process parameters of the method should be controlled. The cutting quality estimation and/or cutting control can thus be parametrizable. In this regard, at least one cutting quality feature and/or a mixture of different cutting quality features can be selected.

The at least one neural network can be or contain a computer-implemented and machine neural network, for example a deep neural network (DNN) and/or a convolutional neural network (CNN). The at least one neural network can be used to determine at least one cutting quality feature using artificial intelligence and/or machine learning, and to optimize cutting quality and/or cutting control. The advantages of the neural network used in embodiments, in particular the DNN (Deep Neural Network), lie in the identification of the signal sources relevant for a cutting quality feature from a high dimensional input without feature engineering in an end-to-end approach by selecting, in the present case, optical features and/or the most informative characteristic thereof, and/or by identifying the image features present in the images and/or partial images that are relevant for the cutting quality feature. This selection process happens automatically during the training of the neural network, in particular of the DNN, and is represented by the weight matrix and/or the parameters of the network after training.

One embodiment relates to a device for laser cutting a workpiece, in particular comprising a method for laser cutting a workpiece according to any of the preceding embodiments and variations thereof, in particular for generating a kerf, with a cutting head. The cutting head has a first interface for a laser source for generating a machining laser beam and an exit aperture for the machining laser beam. The device for laser cutting a workpiece further comprises: an image acquisition device for acquiring 1 to n images of the process zone, in particular the kerf, in at least a part of an illumination light reflected from the process zone through the exit aperture and/or in at least a part of a process light generated by an interaction of the machining laser beam with the workpiece and emitted from the process zone through the exit aperture; and light beam optics provided at least partially in the cutting head and having a device for directing the machining laser beam in the direction of the exit aperture and for directing at least a part of the illumination light reflected by the exit aperture and/or at least a part of the process light emitted through the exit aperture to the image acquisition device. The image acquisition device is designed to acquire each of the 1 to n images as an array of simultaneous partial images T₁ to Tₘ, wherein each or a plurality of the partial images T₁ to Tₘ of the array is distinguished by a. an optical feature of an acquisition angle to the process zone, and at least one optical feature selected from b. a focal length of an optic of the image acquisition device in the direction of the process zone, and c. a polarization, in particular a polarization angle and/or polarization degree, of the acquired process light and/or the acquired illumination light. A determination unit for determining at least one cutting quality feature from the array of partial images T₁ to Tₘ of at least one of the 1 to n images is provided. The determination unit or a control device of the device for laser cutting, which includes the determination unit, can be connected to the image acquisition device in a data-transferring manner.

In embodiments of the method and/or of the device and in variations thereof, the illumination light reflected from the process zone can include or can be day light reflected from the process zone. The cutting head can have a second interface for an illumination light source for generating an illumination light beam of the illumination light, particularly an illumination laser beam. The light beam optics can have a device for directing the illumination light beam in the direction of the exit aperture. The illumination light beam can have a wavelength in the range of 350 to 1500 nm and/or a power of 50 mW to 10 W.

The image acquisition device has at least one radiation intensity sensor for acquiring the 1 to n images, which at least one optical means is or can be connected upstream of,
the optical means being
   - an array of microlenses arranged side by side for acquiring the reflected illumination light and/or the process light from a plurality of individual acquisition angles; or
   - an array of mirrors for acquiring the reflected illumination light and/or the process light from a plurality of individual acquisition angles under kaleidoscopic multiple reflection; and
at least one element selected from
   - an array of microlenses (111) arranged side by side being for acquiring the reflected illumination light (305) and/or the process light (105) with a plurality of individual focal lengths; and
   - an array of micropolarization filters arranged side by side for acquiring the reflected illumination light and/or the process light with a plurality of individual polarizations.

The radiation intensity sensor can be designed to be planar. In the array of microlenses arranged side by side, the microlenses can be arranged side by side in a planar manner. In the array of micropolarization filters arranged side by side, the micropolarization filters can be arranged side by side in a planar manner. The array of microlenses arranged side by side can contain the same and/or different microlenses.

The image acquisition device can include at least one array of microlenses arranged side by side and/or at least one array of micropolarization filters arranged side by side, each of which can be connected upstream of the radiation intensity sensor. The array of microlenses arranged side by side, the array of mirrors for acquisition under kaleidoscopic multiple reflection and/or the array of micropolarization filters arranged side by side are or can be connected spatially in series upstream of the radiation intensity sensor. Furthermore, the array of microlenses arranged side by side, the array of mirrors for acquisition under kaleidoscopic multiple reflection and/or the array of micropolarization filters arranged side by side can be connected upstream of the radiation intensity sensor in a temporally alternating manner. For example, the array of microlenses arranged side by side, the array of mirrors for acquisition under kaleidoscopic multiple reflection and/or the array of micropolarization filters arranged side by side can each be arranged on a holder, for example movable with an actuator, provided in the image acquisition device, in such a way that they are individually movable independently of each other in front of the radiation intensity sensor. The holder can be pivotable, for example. Alternatively, the microlenses and micropolarization filters can be arranged on a rotationally movable holder. Rotation of the rotationally movable holder with the microlenses and micropolarization filters effects the temporal connection in series.

The at least one radiation intensity sensor can be temperature-calibrated and an identification unit can be provided to identify the radiation temperature of the process light. Furthermore, the determination unit can be designed to determine the at least one cutting quality feature based on at least one element selected from a geometry of the process zone, in particular a geometry of the kerf, a temperature distribution over and/or in the process zone, in particular over and/or in the kerf, a velocity distribution of a molten bath in the process zone, in particular in the kerf and/or along the kerf, and at least one differential image of the geometry of the process zone, in particular at least one differential image of the geometry of the kerf, as 3D information contained in the array of the partial images of at least one of the 1 to n images. The image acquisition device can have at least one element selected from a camera that acquires the reflected illumination light and/or the process light from a plurality of individual acquisition angles and/or with a plurality of individual focal lengths, and a polarization camera.

A laser source for generating a machining laser beam with a power of at least 1 kW, preferably at least 6 kW, can be provided at the first interface. The machining laser beam can have a wavelength in the range of 700 nm to 2 µm and/or a power of 1 to 100 kW. The cutting head can be provided with at least one further interface. At least one element selected from a part of the light beam optics, the illumination light source for generating the illumination light beam, in particular an illumination laser beam, and the image acquisition device can be connected to the second interface and/or to the at least one further interface of the cutting head. The light beam optics can be designed to coaxially direct the machining laser beam and the illumination light beam onto the process zone, in particular at an angle of essentially 90° to the workpiece surface. The light beam optics can further be designed to direct at least a part of the illumination light reflected from the process zone through the exit aperture and/or at least a part of the process light emitted from the process zone through the exit aperture, which in each case extends coaxially with respect to the machining laser beam impinging on the process zone, to the image acquisition device.

The determination unit can be designed to select partial images with an acquisition angle in a range of 0° to 20°, preferably between 0° and 15°, to the process zone. The array of microlenses and/or the array of mirrors can be designed to provide a plurality of acquisition angles in a range of 0° to 20°, preferably between 0° and 15°, to the process zone. The determination unit can be designed to select partial images having the same acquisition angle, focal length and/or polarization from the array of partial images T₁ to Tₘ of at least one of the 1 to n images for determining the cutting quality feature. For example, the determination unit can be designed to select partial images acquired one after the other in time with the same acquisition angle and/or focal length to determine a cutting quality feature developing over time.

The determination unit can have at least one neural network for determining the cutting quality feature from the array of partial images T₁ to Tₘ from at least one of the 1 to n images. For example, the neural network can be designed to estimate the cutting quality feature. The at least one neural network can be or contain a computer-implemented and machine neural network, for example a deep neural network (DNN) and/or a convolutional neural network (CNN). The neural network can be designed to have and/or implement the neural network components, properties and/or functions described above regarding the method.

For example, the neural network can be designed to learn at least one spatial cutting quality feature, for example scores of the cutting edge, and/or at least one cutting quality feature developing over time, for example a scoring frequency. The neural network can be designed to autonomously search for and select at least two suitable optical features, at least one image feature and/or at least one partial image feature for determining a particular cutting quality feature. It can be designed to autonomously search for and select at least two suitable optical features, at least one image feature and/or at least one partial image feature for the cutting quality estimation and/or cutting control. Due to the use of the neural network, no sophisticated special software is required for the determination of the cutting quality feature and/or for the cutting control. Furthermore, it is not necessary to reconstruct a three-dimensional geometry of the process zone from the 1 to n images. The neural network can be trained to autonomously search for the information used to determine the cutting quality feature and/or for the quality estimation and/or cutting control in the images and/or partial images.

The neural network can be trainable and/or trained. The determination unit can be designed to initiate access to the trained neural network with at least two of the optical features, at least one of the image features and/or at least one of the partial image features to compute a result for determining and/or estimating the cutting quality feature in question. The determination unit can be designed to initiate training of the neural network. The neural network can be designed to automatically identify during its training those optical features, image features and/or partial image features that are to be considered for the computation of the result. The neural network can be used to determine at least one cutting quality feature using artificial intelligence and/or machine learning, and to optimize cutting quality and/or cutting control.

The device for laser cutting a workpiece can have a control device, which contains the determination unit and/or the identification unit, in particular in each case as a program module. The control device and/or the determination unit can be designed as a computer or include one. The control device and/or the determination unit can be connected to at least the cutting head, the image acquisition device and/or the light beam optics in a wire-bound and data-transferring manner, e.g. to their actuators, light sources, laser sources and sensors. The data transfer can also be implemented by means of fibre optics or wirelessly, for example by radio.

One embodiment further relates to a use of the device for laser cutting a workpiece according to the preceding embodiments and variations for laser cutting a workpiece.

One embodiment relates to a computer program product, comprising one or more program modules that cause the device according to any one of the preceding embodiments and variations thereof to carry out steps of the method according to any one of the preceding embodiments and variations thereof, in particular when the program modules are loaded into a memory of the device. Thus, the computer program product may comprise one or more program modules that cause the device according to any one of the preceding embodiments and variations thereof to carry out at least one of the steps or all steps of the method according to any one of the preceding embodiments and variations thereof, for instance the laser cutting, the step of acquiring of 1 to n images of the process zone and/or the step of determining of at least one cutting quality feature. The determination unit and/or the identification unit of the preceding embodiments and variations thereof can each be designed as a program module. The memory can be included in the device according to any one of the preceding embodiments and variations thereof. The memory can be included in the control device and/or in the determination unit or can be connected thereto in a data-transferring manner.

The embodiments and variations of the device for laser cutting a workpiece can be used in the embodiments and variations of the method for laser cutting a workpiece. With the preceding embodiments of the device for laser cutting a workpiece, the same advantages and functions can be realized as with the embodiments of the method for laser cutting a workpiece, in particular with identical and/or analogous features.

It is to be understood that the above-mentioned features and those to be explained below can be used not only in the combinations indicated, but also in other combinations or in isolation, without departing from the scope of the present invention such as defined in the appended claims.

The invention is explained in more detail below on the basis of exemplary embodiments with reference to the accompanying drawings, which likewise disclose features that are essential to the invention. These exemplary embodiments are used for illustration purposes only and are not to be construed as limiting. For example, a description of an exemplary embodiment with a large number of elements or components should not be interpreted to the effect that all of these elements or components are necessary for implementation. Rather, other exemplary embodiments can also contain alternative elements and components, fewer elements or components, or additional elements or components. Elements or components of different exemplary embodiments can be combined with one another, unless otherwise stated. Modifications and variations which are described for one of the exemplary embodiments can also be applied to other exemplary embodiments. To avoid repetition, elements that are the same or that correspond to one another are denoted by the same reference signs in different figures and are not explained more than once. In the figures:
- Figures 1a to 1d: schematically show an exemplary embodiment of a device 100 for laser cutting;
- Figure 1e: schematically shows an exemplary embodiment of a method for laser cutting;
- Figures 1f and 1g: schematically show a variation of the device 100 for laser cutting;
- Figure 2: schematically shows an exemplary embodiment of a device 300 for laser cutting;
- Figures 3a to 3f: schematically show an exemplary embodiment of a device 400 for laser cutting; and
- Figures 4a to 4d: schematically show an exemplary embodiment of a device 500 for laser cutting.

The terms "device for laser cutting a workpiece" and "device for laser cutting" are used synonymously here. In embodiments and examples, the term "image" may be understood to mean an array of simultaneous partial images, an image acquisition data field, a sensor data field and/or a pixel data field. The term "acquisition angle to the process zone" may be understood, in some embodiments and examples as explained above, as an angle relative to a perpendicular to the workpiece surface. In some exemplary embodiments, the acquisition angle can correspond to an angle relative to an optical axis of a machining laser beam directed toward the process zone. In embodiments, the acquisition angle to the process zone can be defined together with an angle relative to a cutting direction, such as an azimuth angle to the cutting direction.

A kerf generated by laser cutting with the following exemplary embodiments has a cutting front and at least one cutting edge. In embodiments, the laser source for generating a machining laser beam can be designed such that a continuous and/or discontinuous, in particular pulsed, machining laser beam is provided. In some embodiments, the method for laser cutting is controlled with a control device. In some embodiments, the device for laser cutting includes a control device for controlling and/or regulating the device for laser cutting and its controllable components. In the method for laser cutting, the cutting head and/or the machining laser beam can be moved over the workpiece in the cutting direction. The device for laser cutting can include a cutting head movement unit, using which the cutting head and/or machining laser beam can be moved over the workpiece in the cutting direction.

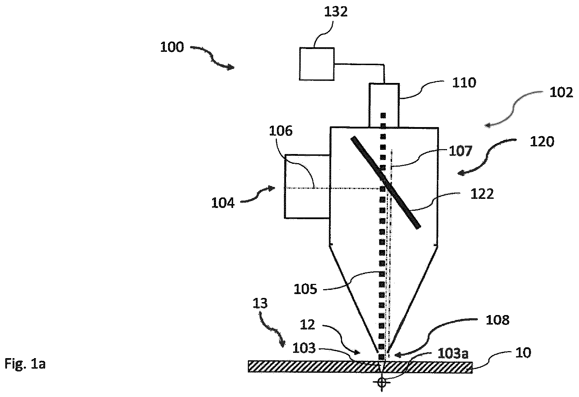

An exemplary embodiment of a device 100 for laser cutting a workpiece 10 having a flat workpiece surface 13 is schematically shown in Figure 1a. The device 100 has a cutting head 102. The cutting head 102 has a first interface 104 for a laser source (not shown) for generating a machining laser beam 106 and an exit aperture 108 for the machining laser beam. For example, the laser source can be coupled to a transport fibre for the machining laser beam at the first interface 104. The laser source generates a machining laser beam 106 with a power of 1 kW and a wavelength in the range of 700 nm to 2 µm. A process light 105 is generated by an interaction of the machining laser beam 106 with the workpiece 10, which is made of stainless steel, for example, in a process zone 12 of the workpiece and is emitted from the process zone 12 into the cutting head 102 through the exit aperture 108.

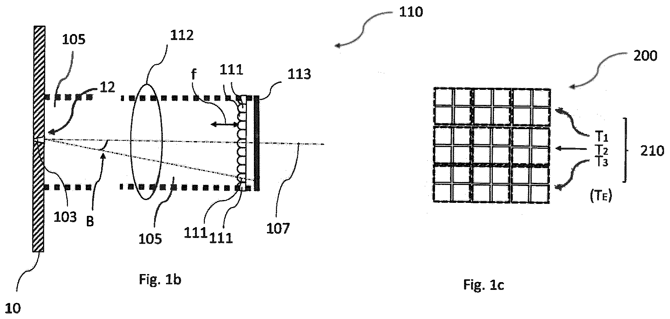

The device 100 for laser cutting further has an image acquisition device 110, such as a camera, for acquiring 1 to n images 200 of the process zone 12 of the workpiece 10. An example of an image 200 is shown in Figure 1c. Light beam optics 120 are provided in the cutting head 102, which in the present example has a dichroic mirror 122 as a device for directing the machining laser beam 106 along an optical axis in the direction of the exit aperture 108 and for directing at least a part of the process light 105 emitted through the exit aperture to the image acquisition device 110. In the present example, a perpendicular 107 to the flat workpiece surface 13, or to the process zone 12 lying in the workpiece surface 12, coincides with the central optical axis of the machining laser beam. In the present example, the image acquisition device 110 and the light beam optics 120 are designed such that the images 200 of the process zone 12 are acquired coaxially to the machining laser beam 106.

The image acquisition device 110 is designed to acquire each of the 1 to n images 200 as an array 210 of simultaneous partial images T₁ to Tₘ, also referred to as T_{E}, as illustrated in detail with partial images T₁ to T₃ in Figure 1c, wherein each of the partial images T₁ to Tₘ of the array 210 is distinguished by an acquisition angle B with respect to the process zone 12. As schematically shown in Figure 1b, the image acquisition device 110 includes a lens 112, an array of microlenses 111 arranged side by side in a planar manner, and a planar radiation intensity sensor 113, for example a CMOS chip (or equivalent), herein also referred to as a sensor. The lens 112 is used to direct the process light 105 emitted from the process zone 12, which is shown interrupted rather than in its entire length in Figure 1b, onto the sensor 113, collimated in the present example. In the present example, the array of microlenses 111 arranged side by side in a planar manner includes a plurality of microlenses, which provide a plurality of acquisition angles B. In Figure 1b, the acquisition angle B provided by one of the microlenses 111 relative to the perpendicular 107 to the workpiece surface is schematically drawn. The process light 105 passes through the array of microlenses 111 and is directed onto the sensor 113 at correspondingly different acquisition angles B. This produces at least one image 200 shown in Figure 1c with an array 210 of partial images. Each partial image T₁ to Tₘ represents an acquisition angle. In the present example, a partial image T₁ to Tₘ each corresponds to an area of the sensor 113 of 2x2 pixels. A partial image T₁ to Tₘ can correspond to a larger or smaller area of the sensor 113 with more or fewer pixels, in other examples.

The microlenses 111 provide acquisition angles B in a range of 0° to 20° relative to the perpendicular 107 to the workpiece surface 13. According to a variation of this example, microlenses 111 are provided, which provide acquisition angles in the range of, for example, 0° to 5° relative to the perpendicular 107 to the workpiece surface for fusion cutting with N₂ as a cutting gas. According to a further variation of this example, microlenses 111 are provided, which provide acquisition angles in the range of, for example, 5° to 20° or 10° to 20° relative to the perpendicular 107 to the workpiece surface for flame cutting with, for example, O₂ as a cutting gas. The reason for this is the inclination of the cutting front relative to the perpendicular 107 to the workpiece surface 13, which can be greater for flame cutting than for fusion cutting. For example, a cooling trace and resulting burr formation can be determined as a cutting quality feature at an acquisition angle B of 0° to 2° relative to the perpendicular 107 to the workpiece surface and at an azimuth angle of 90° to the cutting direction 103a, i.e. perpendicular to the cutting direction 103a. This concerns, for example, fusion cutting with N₂. During flame cutting, a slag residue in the kerf 103 can be determined, for example, in the direction of the cutting front inclined to the rear at an acquisition angle B of 7° to 15° relative to the perpendicular 107 to the workpiece surface 13 and at an azimuth angle of 0° to the cutting direction 103a, depending on the workpiece thickness and workpiece material, on the basis of an increased glow, i.e. an increased brightness in the kerf. Furthermore, during flame cutting, a roughness in the upper region of the cutting edge can be acquired in particular at an acquisition angle B of 5° to 15° relative to the perpendicular 107 to the workpiece surface 13 and at an azimuth angle of 90° to the cutting direction 103a, i.e. perpendicular to the cutting direction 103a. In the present example, the azimuth angle lies in the plane of the workpiece surface 13.

The device 100 for laser cutting includes a determination unit 132. In the present exemplary embodiment, the determination unit 132 is connected to the image acquisition device 110 in a data-transferring manner. The determination unit 132 determines at least one cutting quality feature from the array 210 of partial images T₁ to Tₘ of at least one of the images 200 based on the different acquisition angle as an optical feature. For example, the presence of scoring on a generated cutting edge of the kerf is determined as the cutting quality feature, i.e. a spatial cutting quality feature. In the course of laser cutting, a plurality of images 200 are obtained to track the development of scores during laser cutting and to determine a scoring frequency as a cutting quality feature developing over time. Other examples of a determined spatial cutting quality feature include burr on the underside of the cut workpiece, burr measured as burr height and/or burr volume on the underside of the cutting edge, the roughness of the cutting edge, the waviness of the cutting edge, slag, slag residue in the kerf, slag residue on the underside of the cutting edge, and perpendicularity of the cutting edge to the workpiece surface. Examples of a determined cutting quality feature developing over time include plasma formation, cutting edge breakage, development of spatial and/or local cutting quality features over time, variance of spatial and/or local cutting quality features over time. Multiple cutting quality features can also be determined.

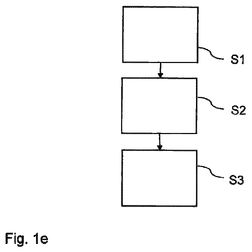

In operation, the device 100 performs a method for laser cutting the workpiece 10, as illustrated in Figure 1e. In the method, steps S1 to S3 are executed: The step S1 includes irradiating the process zone 12 of the workpiece with the machining laser beam 106, cutting the workpiece in a cutting direction 103a in a step S2, and generating the kerf 103. In the illustration of Figure 1a according to the present example, the cutting direction 103a is a straight line perpendicular to the drawing plane and is illustrated as a crosshair. The step S2 includes acquiring 1 to n images 200 of the process zone 12 in at least a part of the process light 105 generated by the interaction of the machining laser beam 106 with the workpiece 10 and emitted from the process zone 12, using the image acquisition device 110. The 1 to n images are acquired one after the other in time, for example as a digital video stream. In step S2, each of the 1 to n images 200 is acquired as an array 210 of simultaneous partial images T₁ to Tₘ, wherein each of the partial images T₁ to Tₘ of the array 210 is distinguished by the optical feature of an acquisition angle to the process zone 12. The presence of scoring or other cutting quality features at the cutting edge of the kerf in the process zone 12 is determined from the array 210 of partial images T₁ to Tₘ of at least one of the 1 to n images 200 in the step S3.

In one variation of the device 100, the array of microlenses 111 arranged side by side in a planar manner includes a plurality of microlenses, wherein each microlens 111 or a plurality of the microlenses 111 differs in the focal length f in the direction of the process zone 12. The process light 105 passes through the array of microlenses 111 and is directed onto the sensor 113 at different focal lengths f. This also produces at least one image 200 with an array of simultaneous partial images T₁ to Tₘ, as shown in part as 3x3 partial images in Figure 1c. In this variation of the device 100, the array of microlenses 111 arranged side by side in a planar manner provides a plurality of different focal lengths f in the direction of the process zone 12 and a plurality of different acquisition angles B. With the determination unit 132, in this variation of the device 100, at least one spatial cutting quality feature and/or at least one cutting quality feature developing over time is determined from the array of partial images T₁ to Tₘ of at least one of the 1 to n images 200 on the basis of the different acquisition angle and/or the different focal lengths as optical features.

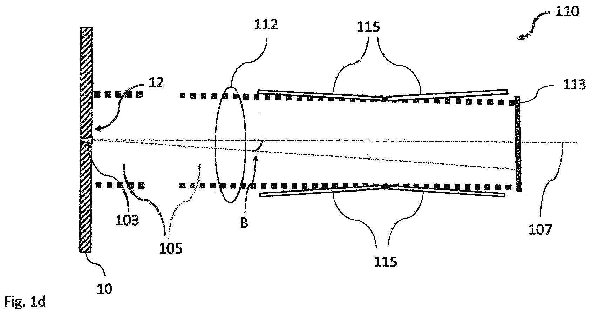

A variation of the device 100 includes, in the image acquisition device 110, an array of mirrors 115 for acquiring the process light 105 from a plurality of individual acquisition angles under kaleidoscopic multiple reflection, as shown in Figure 1d. The process light 105 emitted from the process zone 12 is shown interrupted rather than in its entire length in Figure 1d. Also in operation of this variation of the device 100, at least one image 200 is obtained with an array 210 of simultaneous partial images T₁ to Tₘ, as illustrated in Figure 1c. Here, each of the partial images T₁ to Tₘ of the array 210 is distinguished by the optical feature of an acquisition angle B to the process zone 12, which lies in and/or parallel to the workpiece surface 13. The determination unit 132 determines at least one spatial cutting quality feature and/or at least one cutting quality feature developing over time from the array of partial images T₁ to Tₘ of at least one of the 1 to n images 200 based on the different acquisition angle as an optical feature.

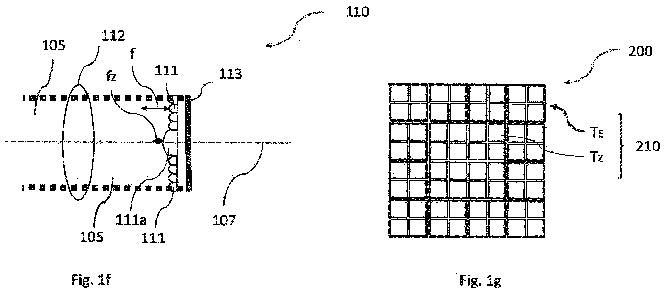

A variation of the device 100 includes a larger microlens 111a in the image acquisition unit 110 at the centre of the array of microlenses 111, as exemplified by a detail shown in Figures 1f and 1g. The central microlens 111a with a focal length f_{Z}, which in the present example is distinguished from the focal length f of the microlenses 111, produces a larger partial image T_{Z}, comprising 4x4 pixels, in the centre of the image at an acquisition angle B of 0° to the perpendicular 107 to the workpiece surface, wherein the perpendicular 107 in the present case coincides with the optical axis of the machining laser beam 106, in the array of partial images T_{E}. This can increase the resolution of the central image, which is coaxial with the optical axis. This is particularly advantageous if acquisition angles close to 0° yield less information gain relative to the optical axis, if a higher resolution of the centre image is to be achieved for pure coaxial observation, and/or if the information of the radiation intensity as a function of the radiation angle is of higher interest in the edge region.

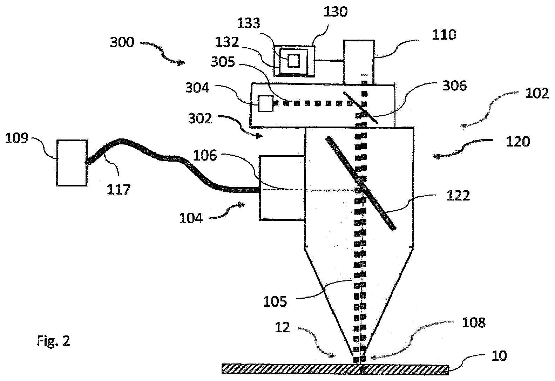

A further exemplary embodiment relates to a device 300 shown in Figure 2. Compared to the device 100, the device 300 includes a second interface 302 for an illumination light source 304 to generate an illumination light beam 305 of an illumination light. A laser source 109, which generates the machining laser beam 106, is coupled to the first interface 104 via a transport fibre 117. The illumination light beam 305 is reflected from the process zone 12 and the adjacent workpiece surface. The light beam optics 120 includes a dichroic mirror 306 as a device for directing the illumination light beam 305 in the direction of the exit aperture 108, and for directing the reflected illumination light beam 305 to the image acquisition device 110. The dichroic mirror 306 is transparent to the reflected illumination light beam 305. The illumination light beam 305 has a wavelength of 750 nm and is generated by the illumination light source 304 with a power of 500 mW.

In this exemplary embodiment, the determination unit 132 is part of a control device 130 of the device 300 mentioned above. The control device 130 is connected in a data-transferring manner to at least the cutting head 102, the image acquisition device 110 and/or the light beam optics 120. The device 100 for laser cutting can be analogously modified. In this example, the determination unit 132 includes a neural network 133 for determining the cutting quality feature from the array of partial images T₁ to Tₘ, as explained above. The neural network 133 autonomously searches for at least two optical features, and optionally at least one image feature and/or partial image feature for determining a particular cutting quality feature, and selects suitable optical features, and optionally image features and/or partial image features. The neural network also autonomously searches for optical features, and optionally one or more image features and/or partial image features for the cutting quality estimation and/or for cutting control, and selects suitable optical features, and optionally one or more image features and/or partial image features.

With the device 300, the images 200 are obtained in step S2 of the method not by acquiring the process light but by acquiring the illumination light 305 reflected from the process zone 12 with the image acquisition device 110, the sensor 113 of which is sensitive to the illumination light. In one variation of this exemplary embodiment, the sensor 113 of the image acquisition device 110 is sensitive to both the process light 105 and the illumination light 305, and the dichroic mirror 306 is also transparent to the process light. By turning off the illumination light source 304 and tuning the sensor 113 to the process light 105, the process light 105 is detected during operation. By turning on the illumination light source 304 and tuning the sensor 113 to the illumination light, the illumination light is detected during operation.

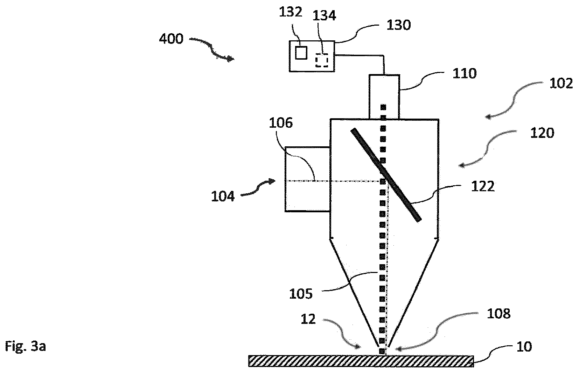

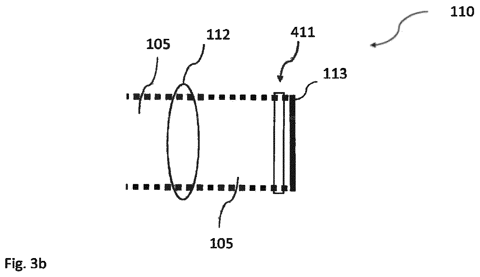

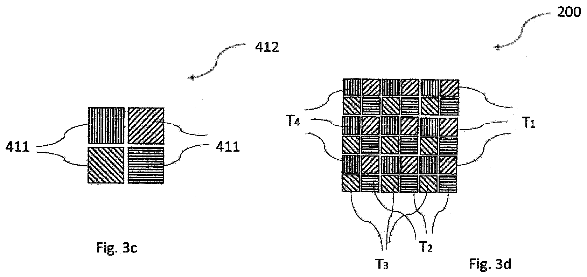

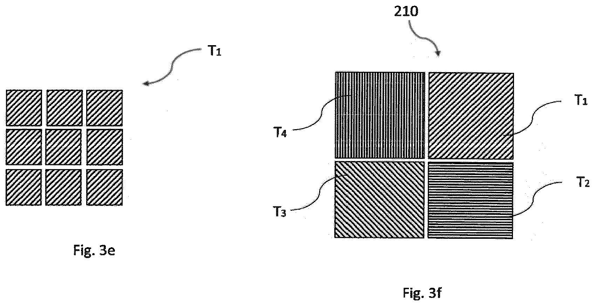

An exemplary embodiment of a device 400 for laser cutting a workpiece 10 is schematically shown in Figure 3a. The device 400 is designed analogous to the device 100, wherein the control device 130 is provided as in the device 300. As compared to the device 100, the image acquisition device 110 of the device 400 includes an array of micropolarization filters 411 arranged side by side in a planar manner as shown schematically in Figures 3b and 3c, in addition to the array of microlenses 111 (not shown in Figure 3b) arranged side by side in a planar manner. The array of micropolarization filters 411 arranged side by side in a planar manner includes a plurality of 2x2 units 412 arranged side by side in a planar manner, in each of which four different polarization filters with polarizations of 0°, 45°, 90°, and 135°, also referred to as polarization angles, are arranged side by side in a planar manner. One of the 2x2 units 412 is shown in Figure 3c.

The process light 105 generated during operation of the device 400 for laser cutting passes through the array of micropolarization filters 411 and is directed onto the sensor 113 in a correspondingly different polarization. As shown in Figure 3d, an image 200 is acquired from the sensor surface of the sensor 113 in step S2 of the method as a sensor data field having partial images T₁ to T₄. The sensor data field is only partially shown in Figure 3d with 36 pixels. In the present example, a 2x2 unit 412 of the micropolarization filters 411 corresponds to one unit of the sensor 113 of 2x2 pixels each. Of all the 2x2 pixel units of the sensor 113, the pixel with one of the polarization angles, for example the pixel with the 0° polarization angle in each case, is combined to form one of the partial images T₁ to T₄ of the image 200. This is illustrated in Figures 3d to 3f using the partial image T₁. Here, the polarization itself is not measured by the sensor 113, rather, the sensor measures the intensity of the acquired light. By comparing the outputs of the associated 2x2 pixels onto which a 2x2 unit 412 of the micropolarization filters projects, the polarizations can be derived. The polarization angle, the polarization degree or both combined can be determined. As a result, an array 210 of four simultaneous partial images T₁ to T₄ with different polarizations of 0°, 45°, 90° and 135° is acquired, as illustrated in Figure 3f. In other exemplary embodiments, other polarization angles of the units 412 and/or a different number of polarizations of the units 412 can be used. Here, the units 412 can each correspond to a larger or smaller area of the sensor 113 of 2x2 pixels. Furthermore, a different number of partial images can be obtained, which correspond to the number of polarizations acquired. A variation of the device 400, like the device 300, is equipped with an illumination light source 304, a corresponding light beam optics 120, and a sensor 113 of the image acquisition device 110 that is also sensitive to the illumination light, so that the process light 105 and/or the illumination light 305 is/are detected with different polarizations. In the present example, the polarization of the acquired process light, in particular the polarization angle and/or the polarization degree, is predetermined as one of the at least two optical features.

In one variation of the device 400, the radiation intensity sensor 110 is temperature-calibrated. In this case, an identification unit 134 is provided in the control device 130 for identifying the radiation temperature of the process light 12, as shown with a dashed line in Figure 3a. Thus, a temperature distribution over and/or in the process zone 12 is determined from at least one of the 1 to n images 200, for example a temperature field over the three-dimensional geometry of the process zone 12. The devices 100 and 300 for laser cutting can be analogously modified.

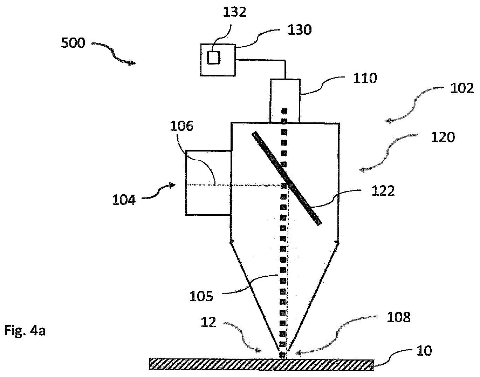

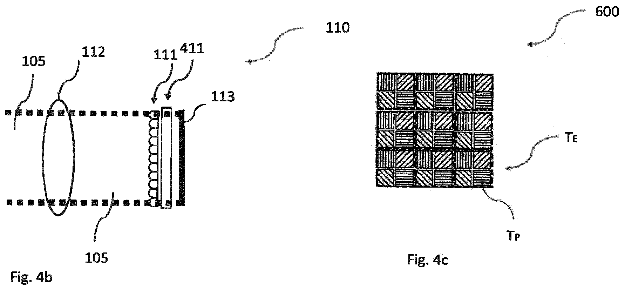

An exemplary embodiment of a device 500 for laser cutting a workpiece 10, which illustrates the device 400 in more detail, is schematically shown in Figure 4a. In the device 500, the image acquisition device 110 is shown including both the array of microlenses 111 of the device 100 arranged side by side in a planar manner and the array of micropolarization filters 411 of the device 400 arranged side by side in a planar manner, as shown in Figure 4b. The array of microlenses 111 arranged side by side in a planar manner and the array of micropolarization filters 411 arranged side by side in a planar manner are arranged one behind the other in front of the sensor 113. In the propagation direction of the process light 105, the array of microlenses 111 is positioned in front of the array of micropolarization filters 411. This order can be reversed.

In operation of the device 500, due to the combination of the array of microlenses 111 and the array of micropolarization filters 411, the process light 105 is acquired with different acquisition angles and different polarizations by the sensor 113 in step S2 of the method. As a result, at least one image 600 is obtained as a sensor data field shown in Figure 4c. The 2x2 pixel units of the image 600 are used to acquire different acquisition angles and the four different polarizations respectively. By the array of micropolarization filters 411, each partial image T_{E} of different acquisition angles with 2x2 = 4 pixels is divided into four further partial images T_{P} of different polarization, as shown in Figure 4c. This finally results in an array of simultaneous partial images T₁ to Tₘ, wherein each partial image has a resolution of 1 pixel. **In** a variation of this example (not shown), 8x8 partial images T_{E} of 400x400 pixels each are obtained using an array of 8x8 microlenses. The sensor 113 thus has a total of 8x8x400x400 pixels, which is approximately 10 megapixels. The array of micropolarization filters 411 reduces the resulting resolution of each partial image T_{E} to 200x200 pixels. This exemplary embodiment is suitable for observing a typical process zone of a cutting process in which the kerf has a width of 200-1000 um. Due to the combination of the array of microlenses 111 and the array of micropolarization filters 411, more information about the cutting process is acquired, allowing for a particularly accurate estimate of the cutting quality. In a modification of this example, the determination unit 132 includes the neural network 133 for determining the cutting quality feature from the array of partial images T₁ to Tₘ, as explained above.

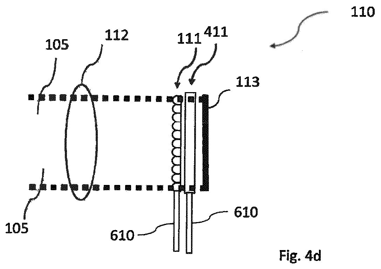

In one variation of the device 500, the array of microlenses 111 arranged side by side and the array of micropolarization filters 411 arranged side by side are each provided on a holder 610, for example pivotable with an actuator, as shown in Figure 4d. The holders 610 are each pivotable in a plane spanned by the microlenses 111 and the micropolarization filters 441, respectively. In this way, the microlenses 111 and the micropolarization filters 411 can be pivoted independently of one another individually in front of the radiation intensity sensor 113 into the beam path of the light to be acquired with the image acquisition device 110 in front of the sensor 113, for example in a temporally alternating manner. Thus, the device 500 can be operated flexibly. In further variations, only the array of microlenses 111 arranged side by side or only the array of micropolarization filters 411 arranged side by side is provided with the holder 610. In embodiments, multiple different arrays of microlenses 111 and/or multiple different arrays of micropolarization filters 411 can also be provided on pivotable holders 610. In this regard, each array is individually provided with a pivotable holder 610. In this way, the acquisition angles provided by the microlenses and/or the polarizations provided by the micropolarization filters can be varied as needed.

A further variation of the device 500, like the device 300, is equipped with an illumination light source 304, corresponding light beam optics 120, and a sensor 113 of the image acquisition device 110 that is also sensitive to the illumination light, so that the process light and/or the illumination light is/are detected with different polarizations and different acquisition angles.

### List of reference signs

- 10: Workpiece
- 12: Process zone
- 13: Workpiece surface
- 100: Device for laser cutting
- 102: Cutting head
- 103: Kerf
- 103a: Cutting direction
- 104: Interface
- 105: Process light
- 106: Machining laser beam
- 107: Perpendicular to the workpiece surface
- 108: Exit aperture
- 109: Laser source
- 110: Image acquisition device
- 111: Microlens
- 111a: Microlens
- 112: Lens
- 113: Sensor
- 115: Mirror
- 117: Transport fibre
- 120: Light beam optics
- 122: Dichroic mirror
- 130: Control device
- 132: Determination unit
- 133: Neural network
- 134: Identification unit
- 200: Image
- 210: Array of partial images
- 300: Device for laser cutting
- 302: Interface
- 304: Illumination light source
- 305: Illumination light beam, illumination light
- 306: Dichroic mirror
- 400: Device for laser cutting
- 411: Micropolarization filter
- 412: Unit of micropolarization filters
- 500: Device for laser cutting
- 600: Image
- 610: Holder
- B: Acquisition angle
- f: Focal length
- f_{Z}: Focal length
- S1: Step
- S2: Step
- S3: Step
- T_{E}: Partial image
- T_{P}: Partial image
- T_{Z}: Partial image

## Claims

1. A method for laser cutting a workpiece (10), by means of a device for laser cutting (100; 300; 400; 500) with a cutting head (102);
comprising the steps of
irradiating (S1) the workpiece (10) with a machining laser beam, cutting the workpiece (10) in a cutting direction (103a) and generating a process zone (12) and in particular generating a kerf (103); and
acquiring (S2) 1 to n images (200; 600) of the process zone (12) in at least a part of an illumination light (305) reflected from the process zone (12) and/or in at least a part of a process light (105) generated by an interaction of the machining laser beam with the workpiece (10) and emitted from the process zone (12) by means of an image acquisition device (110);
**characterized in that**
each of the 1 to n images (200; 600) is acquired as an array (210) of simultaneous partial images T₁ to Tₘ, wherein each of the partial images T₁ to Tₘ of the array (210) is distinguished by
a. an optical feature of an acquisition angle (B) to the process zone (12),
and at least one optical feature selected from
b. a focal length (f; f_{Z}) of an optic (111; 111a; 115) of the image acquisition device (110) in the direction of the process zone (12), and
c. a polarization of the acquired process light (105) and/or the acquired illumination light (305);
and at least one cutting quality feature is determined (S3) from the array (210) of partial images T₁ to Tₘ of at least one of the 1 to n images (200; 600);
wherein the 1 to n images (200; 600) are acquired with at least one radiation intensity sensor (113) of the image acquisition device (110), which at least one optical means is or will be connected upstream of,
the optical means being
- an array of microlenses (111) arranged side by side for acquiring the reflected illumination light (305) and/or the process light (105) from a plurality of individual acquisition angles; or
- an array of mirrors (115) for acquiring the reflected illumination light (305) and/or the process light (105) from a plurality of individual acquisition angles under kaleidoscopic multiple reflection; and
at least one element selected from
- an array of microlenses (111) arranged side by side being for acquiring the reflected illumination light (305) and/or the process light (105) with a plurality of individual focal lengths; and
- an array of micropolarization filters (411) arranged side by side for acquiring the reflected illumination light (305) and/or the process light (105) with a plurality of individual polarizations.

2. The method according to claim 1,
wherein the array of microlenses (111) arranged side by side, the array of mirrors (115) for acquisition under kaleidoscopic multiple reflection and/or the array of micropolarization filters (411) arranged side by side are or will be connected spatially in series upstream of the radiation intensity sensor (113) in the propagation direction of the light, and/or
wherein the array of microlenses (111) arranged side by side, the array of mirrors (115) for acquisition under kaleidoscopic multiple reflection and/or the array of micropolarization filters (411) arranged side by side are connected upstream of the radiation intensity sensor (113) in a temporally alternating manner.

3. The method according to any one of the preceding claims,
wherein the 1 to n images (200; 600) are acquired with at least one temperature-calibrated radiation intensity sensor (113) and the radiation temperature of the process light (105) is identified; and/or
wherein the at least one cutting quality feature based on at least one element selected from a geometry of the process zone (12), in particular a geometry of the kerf, a temperature distribution over and/or in the process zone (12), in particular over and/or in the kerf (103), a velocity distribution of a molten bath in the process zone (12), in particular in the kerf (103) and/or along the kerf, and at least one differential image of the geometry of the process zone (12), in particular at least one differential image of the geometry of the kerf (103), is determined as 3D information contained in the array (210) of the partial images of at least one of the 1 to n images (200; 600).

4. The method according to any one of the preceding claims,
wherein an illumination light beam (305) of an illumination device is directed onto the process zone (12); and/or
wherein the machining laser beam (106) and the illumination light beam (305) are directed coaxially, in particular each at an angle of essentially 90° to the workpiece surface (13), onto the process zone (12); and/or
wherein, during the acquisition of the 1 to n images (200; 600), at least a part of the illumination light beam reflected from the process zone (12) and/or at least a part of the process light (105) is acquired, which in each case extends coaxially with respect to the machining laser beam impinging on the process zone (12).

5. The method according to any of the preceding claims,
wherein partial images are selected with an acquisition angle (B) in a range of 0° to 20°, preferably between 0° and 15°, to the process zone (12); and/or
wherein the array of microlenses (111) and/or the array of mirrors (115) provide a plurality of acquisition angles (B) in a range of 0° to 20°, preferably between 0° and 15°, to the process zone (12); and/or
wherein partial images having the same acquisition angle, focal length and/or
polarization are selected from the array (210) of partial images T₁ to Tₘ of at least one of the 1 to n images to determine the cutting quality feature; and/or
wherein the cutting quality feature is determined from the array (210) of partial images T₁ to Tₘ of at least one of the 1 to n images with at least one neural network (133).

6. A device (100; 300; 400; 500) for laser cutting a workpiece (10), in particular comprising a method for laser cutting a workpiece (10) according to any one of the preceding claims,
in particular for generating a kerf (103);
with a cutting head (102);
wherein the cutting head comprises
- a first interface (104) for a laser source for generating a machining laser beam (106); and
- an exit aperture (108) for the machining laser beam;
and wherein the device for laser cutting (100; 300; 400; 500) a workpiece further comprises
- an image acquisition device (110) for acquiring 1 to n images (200; 600) of the process zone (12), in particular the kerf (103), in at least a part of an illumination light (305) reflected from the process zone (12) through the exit aperture (108) and/or in at least a part of a process light (105) generated by an interaction of the machining laser beam with the workpiece (10) and emitted from the process zone (12) through the exit aperture (108); and
- light beam optics (120) provided at least partially in the cutting head and having a device (122; 306) for directing the machining laser beam in the direction of the exit aperture (108) and for directing at least a part of the illumination light (305) reflected by the exit aperture and/or at least a part of the process light (105) emitted through the exit aperture (108) to the image acquisition device (110);
**characterized in that**
the image acquisition device (110) is designed for acquiring each of the 1 to n images (200; 600) as an array (210) of simultaneous partial images T₁ to Tₘ, wherein each of the partial images T₁ to Tₘ of the array (210) is distinguished by
a. an optical feature of an acquisition angle (B) to the process zone (12),
and at least one optical feature selected from
b. a focal length (f; f_{Z}) of an optic (111; 111a; 115) of the image acquisition device (110) in the direction of the process zone (12), and
c. a polarization of the acquired process light (105) and/or the acquired illumination light (305);
and a determination unit (132) for determining at least one cutting quality feature from the array (210) of partial images T₁ to Tₘ of at least one of the 1 to n images (200; 600) is provided;
wherein the image acquisition device (110) has at least one radiation intensity sensor (113) for acquiring the 1 to n images (200; 600), which at least one optical means is or can be connected upstream of,
the optical means being
- an array of microlenses (111) arranged side by side for acquiring the reflected illumination light (305) and/or the process light (105) from a plurality of individual acquisition angles; or
- an array of mirrors (115) for acquiring the reflected illumination light (305) and/or the process light (105) from a plurality of individual acquisition angles under kaleidoscopic multiple reflection; and
at least one element selected from
- an array of microlenses (111) arranged side by side being for acquiring the reflected illumination light (305) and/or the process light (105) with a plurality of individual focal lengths; and
- an array of micropolarization filters (411) arranged side by side for acquiring the reflected illumination light (305) and/or the process light (105) with a plurality of individual polarizations.

7. The device according to claim 6,
wherein the cutting head has a second interface (302) for an illumination light source (304) for generating an illumination light beam of the illumination light (305), in particular an illumination laser beam; and/or
wherein the light beam optics (120) has a device (306) for directing the illumination light beam (305) in the direction of the exit aperture (108).

8. The device according to any one of claims 6 to 7,
wherein the array of microlenses (111) arranged side by side, the array of mirrors (115) for acquisition under kaleidoscopic multiple reflection and/or the array of micropolarization filters (411) arranged side by side are and/or can be connected spatially in series upstream of the radiation intensity sensor (113); and/or
wherein the array of microlenses (111) arranged side by side, the array of mirrors (115) for acquisition under kaleidoscopic multiple reflection and/or the array of micropolarization filters (411) arranged side by side can be connected upstream of the radiation intensity sensor (113) in a temporally alternating manner.

9. The device according to any one of claims 6 to 8,
wherein the at least one radiation intensity sensor (113) is temperature-calibrated and an identification unit (134) is provided for identifying the radiation temperature of the process light (105); and/or
wherein the determination unit is designed to determine at least one cutting quality feature based on at least one element selected from a geometry of the process zone (12), in particular a geometry of the kerf (103), a temperature distribution over and/or in the process zone (12), in particular over and/or in the kerf (103), a velocity distribution of a molten bath in the process zone (12), in particular in the kerf (103) and/or along the kerf, and at least one differential image of the geometry of the process zone (12), in particular at least one differential image of the geometry of the kerf (103), as 3D information contained in the array (210) of the partial images of at least one of the 1 to n images (200; 600);
and/or
wherein the image acquisition device (110) has at least one element selected from a camera that acquires the reflected illumination light and/or the process light from a plurality of individual acquisition angles and/or with a plurality of individual focal lengths, and a polarization camera.

10. The device according to any one of claims 6 to 9,
wherein a laser source (109) for generating a machining laser beam (106) with a power of at least 1 kW, preferably at least 6 kW, is provided at the first interface (104); and/or
wherein the cutting head (102) is provided with at least one further interface (302); and/or
wherein at least one element selected from a part of the light beam optics (120), the illumination light source (304) for generating the illumination light beam (305), in particular an illumination laser beam, and the image acquisition device (110) is connected to the second interface (302) and/or to the at least one further interface (302) of the cutting head; and/or
wherein the light beam optics (120) is designed for coaxially directing the machining laser beam (106) and the illumination light beam onto the process zone (12), in particular at an angle of essentially 90° to the workpiece surface; and/or
wherein the light beam optics (120) is designed to guide at least a part of the illumination light (305) reflected from the process zone (12) through the exit aperture (108) and/or at least a part of the process light (105) emitted from the process zone (12) through the exit aperture, which in each case extends coaxially with respect to the machining laser beam impinging on the process zone (12), to the image acquisition device (110).

11. The device according to any one of claims 6 to 10,
wherein the determination unit (132) is designed to select partial images with an acquisition angle in a range of 0° to 20°, preferably between 0° and 15°, to the process zone (12); and/or
wherein the array of microlenses (111) and/or the array of mirrors (115) are designed to provide a plurality of acquisition angles in a range of 0° to 20°, preferably between 0° and 15°, to the process zone (12); and/or
wherein the determination unit (132) is designed to select partial images having the same acquisition angle, focal length and/or polarization from the array (210) of partial images T₁ to Tₘ of at least one of the 1 to n images (200; 600) to determine the cutting quality feature; and/or
wherein the determination unit (132) has at least one neural network (133) for determining the cutting quality feature from the array (210) of partial images T₁ to Tₘ from at least one of the 1 to n images (200; 600).

12. The device according to any one of claims 6 to 11,
having a control device (130) which contains the determination unit (132) and/or the identification unit (134), in particular in each case as a program module.

13. A computer program product comprising one or more program modules, which cause the device according to any one of claims 6 to 12 to carry out steps of the method according to any one of claims 1 to 5, in particular when the program modules are loaded into a memory of the device.

## Patentansprüche

1. Verfahren zum Laserschneiden eines Werkstücks (10) mittels einer Vorrichtung zum Laserschneiden (100; 300; 400; 500) mit einem Schneidkopf (102);
umfassend die Schritte
Bestrahlen (S1) des Werkstücks (10) mit einem Bearbeitungslaserstrahl, Schneiden des Werkstücks (10) in einer Schneidrichtung (103a) und Erzeugen einer Prozesszone (12) und insbesondere Erzeugen eines Schnittspalts (103); und
Erfassen (S2) von 1 bis n Bildern (200; 600) der Prozesszone (12) in zumindest einem Teil eines von der Prozesszone (12) reflektierten Beleuchtungslichts (305) und/oder in zumindest einem Teil eines durch eine Wechselwirkung des Bearbeitungslaserstrahls mit dem Werkstück (10) erzeugten und von der Prozesszone (12) emittierten Prozesslichts (105) mittels einer Bilderfassungsvorrichtung (110);
**dadurch gekennzeichnet, dass**
jedes der 1 bis n Bilder (200; 600) als Anordnung (210) von gleichzeitigen Teilbildern T₁ bis Tₘ erfasst wird, wobei jedes der Teilbilder T₁ bis Tₘ der Anordnung (210) sich auszeichnet durch
a. ein optisches Merkmal eines Erfassungswinkels (B) zu der Prozesszone (12), und mindestens ein optisches Merkmal, ausgewählt aus
b. einer Brennweite (f; fz) einer Optik (111; 111a; 115) der Bilderfassungsvorrichtung (110) in Richtung der Prozesszone (12), und
c. einer Polarisation des erfassten Prozesslichts (105) und/oder des erfassten Beleuchtungslichts (305);
und aus der Anordnung (210) von Teilbildern T₁ bis Tₘ von mindestens einem der 1 bis n Bilder (200; 600) mindestens ein Schnittqualitätsmerkmal bestimmt wird (S3);
wobei die 1 bis n Bilder (200; 600) mit mindestens einem Strahlungsintensitätssensor (113) der Bilderfassungsvorrichtung (110) erfasst werden, dem mindestens ein optisches Mittel vorgeschaltet ist oder wird,
wobei die optischen Mittel sind
- eine Anordnung von nebeneinander angeordneten Mikrolinsen (111) zum Erfassen des reflektierten Beleuchtungslichts (305) und/oder des Prozesslichts (105) aus einer Vielzahl einzelner Erfassungswinkel; oder
- eine Anordnung von Spiegeln (115) zum Erfassen des reflektierten Beleuchtungslichts (305) und/oder des Prozesslichts (105) aus einer Vielzahl einzelner Erfassungswinkel unter kaleidoskopischer Mehrfachreflexion; und
mindestens ein Element, ausgewählt aus
- einer Anordnung von nebeneinander angeordneten Mikrolinsen (111) zum Erfassen des reflektierten Beleuchtungslichts (305) und/oder des Prozesslichts (105) mit einer Vielzahl einzelner Brennweiten; und
- einer Anordnung von nebeneinander angeordneten Mikropolarisationsfiltern (411) zum Erfassen des reflektierten Beleuchtungslichts (305) und/oder des Prozesslichts (105) mit einer Vielzahl einzelner Polarisationen.

2. Verfahren nach Anspruch 1,
wobei die Anordnung von nebeneinander angeordneten Mikrolinsen (111), die Anordnung von Spiegeln (115) zur Erfassung unter kaleidoskopischer Mehrfachreflexion und/oder die Anordnung von nebeneinander angeordneten Mikropolarisationsfiltern (411) dem Strahlungsintensitätssensor (113) in Ausbreitungsrichtung des Lichts räumlich in Reihe vorgeschaltet sind oder werden, und/oder
wobei die Anordnung von nebeneinander angeordneten Mikrolinsen (111), die Anordnung von Spiegeln (115) zur Erfassung unter kaleidoskopischer Mehrfachreflexion und/oder die Anordnung von nebeneinander angeordneten Mikropolarisationsfiltern (411) dem Strahlungsintensitätssensor (113) zeitlich abwechselnd vorgeschaltet sind.

3. Verfahren nach einem der vorhergehenden Ansprüche,
wobei die 1 bis n Bilder (200; 600) mit mindestens einem temperaturkalibrierten Strahlungsintensitätssensor (113) erfasst werden und die Strahlungstemperatur des Prozesslichts (105) identifiziert wird; und/oder
wobei das mindestens eine Schnittqualitätsmerkmal basierend auf mindestens einem Element, ausgewählt aus einer Geometrie der Prozesszone (12), insbesondere einer Geometrie des Schnittspalts, einer Temperaturverteilung über und/oder in der Prozesszone (12), insbesondere über und/oder in dem Schnittspalt (103), einer Geschwindigkeitsverteilung eines Schmelzbades in der Prozesszone (12), insbesondere in dem Schnittspalt (103) und/oder entlang des Schnittspalts, und mindestens einem Differenzbild der Geometrie der Prozesszone (12), insbesondere mindestens einem Differenzbild der Geometrie des Schnittspalts (103), als 3D-Information bestimmt wird, die in der Anordnung (210) der Teilbilder von mindestens einem der 1 bis n Bilder (200; 600) enthalten ist.

4. Verfahren nach einem der vorhergehenden Ansprüche,
wobei ein Beleuchtungslichtstrahl (305) einer Beleuchtungsvorrichtung auf die Prozesszone (12) gerichtet ist; und/oder
wobei der Bearbeitungslaserstrahl (106) und der Beleuchtungslichtstrahl (305) koaxial, insbesondere jeweils in einem Winkel von im Wesentlichen 90 ° zu der Werkstückoberfläche (13), auf die Prozesszone (12) gerichtet sind; und/oder
wobei bei der Erfassung der 1 bis n Bilder (200; 600) zumindest ein Teil des von der Prozesszone (12) reflektierten Beleuchtungslichtstrahls und/oder zumindest ein Teil des Prozesslichts (105) erfasst wird, der jeweils koaxial in Bezug auf den auf die Prozesszone (12) auftreffenden Bearbeitungslaserstrahl verläuft.

5. Verfahren nach einem der vorhergehenden Ansprüche,
wobei Teilbilder mit einem Erfassungswinkel (B) in einem Bereich von 0 ° bis 20 °, vorzugsweise zwischen 0 ° und 15 °, zur Prozesszone (12) ausgewählt werden; und/oder wobei die Anordnung von Mikrolinsen (111) und/oder die Anordnung von Spiegeln (115) eine Vielzahl von Erfassungswinkeln (B) in einem Bereich von 0 ° bis 20 °, vorzugsweise zwischen 0 ° und 15 °, zur Prozesszone (12) bereitstellen; und/oder
wobei aus der Anordnung (210) von Teilbildern T₁ bis Tₘ von mindestens einem der 1 bis n Bilder Teilbilder mit gleichem Erfassungswinkel, gleicher Brennweite und/oder gleicher Polarisation ausgewählt werden, um das Schnittqualitätsmerkmal zu bestimmen; und/oder
wobei das Schnittqualitätsmerkmal aus der Anordnung (210) von Teilbildern T₁ bis Tₘ von mindestens einem der 1 bis n Bilder mit mindestens einem neuronalen Netzwerk (133) bestimmt wird.

6. Vorrichtung (100; 300; 400; 500) zum Laserschneiden eines Werkstücks (10), insbesondere umfassend
ein Verfahren zum Laserschneiden eines Werkstücks (10) nach einem der vorhergehenden Ansprüche,
insbesondere zum Erzeugen eines Schnittspalts (103);
mit einem Schneidkopf (102);
wobei der Schneidkopf umfasst
- eine erste Schnittstelle (104) für eine Laserquelle zum Erzeugen eines Bearbeitungslaserstrahls (106); und
- eine Austrittsöffnung (108) für den Bearbeitungslaserstrahl;
und wobei die Vorrichtung zum Laserschneiden (100; 300; 400; 500) eines Werkstücks ferner umfasst
- eine Bilderfassungsvorrichtung (110) zum Erfassen von 1 bis n Bildern (200; 600) der Prozesszone (12), insbesondere des Schnittspalts (103), in zumindest einem Teil eines von der Prozesszone (12) durch die Austrittsöffnung (108) reflektierten Beleuchtungslichts (305) und/oder in zumindest einem Teil eines durch eine Wechselwirkung des Bearbeitungslaserstrahls mit dem Werkstück (10) erzeugten und von der Prozesszone (12) durch die Austrittsöffnung (108) emittierten Prozesslichts (105); und
- eine zumindest teilweise im Schneidkopf bereitgestellte Lichtstrahloptik (120) mit einer Vorrichtung (122; 306) zum Ausrichten des Bearbeitungslaserstrahls in Richtung der Austrittsöffnung (108) und zum Ausrichten zumindest eines Teils des von der Austrittsöffnung reflektierten Beleuchtungslichts (305) und/oder zumindest eines Teils des durch die Austrittsöffnung (108) emittierten Prozesslichts (105) auf die Bilderfassungsvorrichtung (110);
**dadurch gekennzeichnet, dass**
die Bilderfassungsvorrichtung (110) dazu ausgelegt ist, jedes der 1 bis n Bilder (200; 600) als Anordnung (210) von simultanen Teilbildern T₁ bis Tₘ zu erfassen, wobei jedes der Teilbilder T₁ bis Tₘ der Anordnung (210) sich auszeichnet durch
a. ein optisches Merkmal eines Erfassungswinkels (B) zu der Prozesszone (12), und mindestens ein optisches Merkmal, ausgewählt aus
b. einer Brennweite (f; fz) einer Optik (111; 111a; 115) der Bilderfassungsvorrichtung (110) in Richtung der Prozesszone (12), und
c. einer Polarisation des erfassten Prozesslichts (105) und/oder des erfassten Beleuchtungslichts (305);
und eine Bestimmungseinheit (132) zum Bestimmen mindestens eines Schnittqualitätsmerkmals aus der Anordnung (210) von Teilbildern T₁ bis Tₘ aus mindestens einem der 1 bis n Bilder (200; 600) bereitgestellt wird;
wobei die Bilderfassungsvorrichtung (110) zum Erfassen der 1 bis n Bilder (200; 600) mindestens einen Strahlungsintensitätssensor (113) aufweist, dem mindestens ein optisches Mittel vorgeschaltet ist oder vorgeschaltet sein kann,
wobei die optischen Mittel sind
- eine Anordnung von nebeneinander angeordneten Mikrolinsen (111) zum Erfassen des reflektierten Beleuchtungslichts (305) und/oder des Prozesslichts (105) aus einer Vielzahl einzelner Erfassungswinkel; oder
- eine Anordnung von Spiegeln (115) zum Erfassen des reflektierten Beleuchtungslichts (305) und/oder des Prozesslichts (105) aus einer Vielzahl einzelner Erfassungswinkel unter kaleidoskopischer Mehrfachreflexion; und
mindestens ein Element, ausgewählt aus
- einer Anordnung von nebeneinander angeordneten Mikrolinsen (111) zum Erfassen des reflektierten Beleuchtungslichts (305) und/oder des Prozesslichts (105) mit einer Vielzahl einzelner Brennweiten; und
- einer Anordnung von nebeneinander angeordneten Mikropolarisationsfiltern (411) zum Erfassen des reflektierten Beleuchtungslichts (305) und/oder des Prozesslichts (105) mit einer Vielzahl einzelner Polarisationen.

7. Vorrichtung nach Anspruch 6,
wobei der Schneidkopf eine zweite Schnittstelle (302) für eine Beleuchtungslichtquelle (304) zum Erzeugen eines Beleuchtungslichtstrahls des Beleuchtungslichts (305), insbesondere eines Beleuchtungslaserstrahls, aufweist; und/oder
wobei die Lichtstrahloptik (120) eine Vorrichtung (306) zum Ausrichten des Beleuchtungslichtstrahls (305) in Richtung der Austrittsöffnung (108) aufweist.

8. Vorrichtung nach einem der Ansprüche 6 bis 7,
wobei die Anordnung von nebeneinander angeordneten Mikrolinsen (111), die Anordnung von Spiegeln (115) zur Erfassung unter kaleidoskopischer Mehrfachreflexion und/oder die Anordnung von nebeneinander angeordneten Mikropolarisationsfiltern (411) dem Strahlungsintensitätssensor (113) räumlich in Reihe vorgeschaltet sind oder werden können; und/oder
wobei die Anordnung von nebeneinander angeordneten Mikrolinsen (111), die Anordnung von Spiegeln (115) zur Erfassung unter kaleidoskopischer Mehrfachreflexion und/oder die Anordnung von nebeneinander angeordneten Mikropolarisationsfiltern (411) dem Strahlungsintensitätssensor (113) zeitlich abwechselnd vorgeschaltet sein können.

9. Vorrichtung nach einem der Ansprüche 6 bis 8,
wobei der mindestens eine Strahlungsintensitätssensor (113) temperaturkalibriert ist und eine Identifikationseinheit (134) zum Identifizieren der Strahlungstemperatur des Prozesslichts (105) bereitgestellt ist; und/oder
wobei die Bestimmungseinheit dazu ausgelegt ist, das mindestens eine Schnittqualitätsmerkmal basierend auf mindestens einem Element, ausgewählt aus einer Geometrie der Prozesszone (12), insbesondere einer Geometrie des Schnittspalts (103), einer Temperaturverteilung über und/oder in der Prozesszone (12), insbesondere über und/oder in dem Schnittspalt (103), einer Geschwindigkeitsverteilung eines Schmelzbades in der Prozesszone (12), insbesondere in dem Schnittspalt (103) und/oder entlang des Schnittspalts, und mindestens einem Differenzbild der Geometrie der Prozesszone (12), insbesondere mindestens einem Differenzbild der Geometrie des Schnittspalts (103), als 3D-Information zu bestimmen, die in der Anordnung (210) der Teilbilder von mindestens einem der 1 bis n Bilder (200; 600) enthalten ist;
und/oder
wobei die Bilderfassungsvorrichtung (110) mindestens ein Element aufweist, ausgewählt aus einer Kamera, die das reflektierte Beleuchtungslicht und/oder das Prozesslicht aus einer Vielzahl von einzelnen Erfassungswinkeln und/oder mit einer Vielzahl von einzelnen Brennweiten erfasst, und einer Polarisationskamera.

10. Vorrichtung nach einem der Ansprüche 6 bis 9,
wobei an der ersten Schnittstelle (104) eine Laserquelle (109) zum Erzeugen eines Bearbeitungslaserstrahls (106) mit einer Leistung von mindestens 1 kW, vorzugsweise mindestens 6 kW, bereitgestellt ist; und/oder
wobei der Schneidkopf (102) mit mindestens einer weiteren Schnittstelle (302) versehen ist; und/oder
wobei mindestens ein Element, ausgewählt aus einem Teil der Lichtstrahloptik (120), der Beleuchtungslichtquelle (304) zum Erzeugen des Beleuchtungslichtstrahls (305), insbesondere eines Beleuchtungslaserstrahls, und der Bilderfassungsvorrichtung (110), mit der zweiten Schnittstelle (302) und/oder mit der mindestens einen weiteren Schnittstelle (302) des Schneidkopfes verbunden ist; und/oder
wobei die Lichtstrahloptik (120) dazu ausgelegt ist, den Bearbeitungslaserstrahl (106) und den Beleuchtungslichtstrahl koaxial auf die Prozesszone (12) zu richten, insbesondere in einem Winkel von im Wesentlichen 90 ° zu der Werkstückoberfläche; und/oder
wobei die Lichtstrahloptik (120) dazu ausgelegt ist, zumindest einen Teil des von der Prozesszone (12) durch die Austrittsöffnung (108) reflektierten Beleuchtungslichts (305) und/oder zumindest einen Teil des von der Prozesszone (12) durch die Austrittsöffnung emittierten Prozesslichts (105), der jeweils koaxial in Bezug auf den auf die Prozesszone (12) auftreffenden Bearbeitungslaserstrahl verläuft, zur Bilderfassungsvorrichtung (110) zu leiten.

11. Vorrichtung nach einem der Ansprüche 6 bis 10,
wobei die Bestimmungseinheit (132) dazu ausgelegt ist, Teilbilder mit einem Erfassungswinkel in einem Bereich von 0 ° bis 20 °, vorzugsweise zwischen 0 ° und 15 °, zur Prozesszone (12) auszuwählen; und/oder
wobei die Anordnung von Mikrolinsen (111) und/oder die Anordnung von Spiegeln (115) dazu ausgelegt sind, eine Vielzahl von Erfassungswinkeln in einem Bereich von 0 ° bis 20 °, vorzugsweise zwischen 0 ° und 15 °, zur Prozesszone (12) bereitzustellen; und/oder wobei die Bestimmungseinheit (132) dazu ausgelegt ist, aus der Anordnung (210) von Teilbildern T₁ bis Tₘ von mindestens einem der 1 bis n Bilder (200; 600) Teilbilder mit gleichem Erfassungswinkel, gleicher Brennweite und/oder gleicher Polarisation auszuwählen, um das Schnittqualitätsmerkmal zu bestimmen; und/oder
wobei die Bestimmungseinheit (132) mindestens ein neuronales Netzwerk (133) zum Bestimmen des Schnittqualitätsmerkmals aus der Anordnung (210) von Teilbildern T₁ bis Tₘ von mindestens einem der 1 bis n Bilder (200; 600) aufweist.

12. Vorrichtung nach einem der Ansprüche 6 bis 11,
die eine Steuervorrichtung (130) aufweist, die die Bestimmungseinheit (132) und/oder die Identifikationseinheit (134), insbesondere jeweils als Programmmodul, enthält.

13. Computerprogrammprodukt, das ein oder mehrere Programmmodule umfasst, die die Vorrichtung nach einem der Ansprüche 6 bis 12 veranlassen, Schritte des Verfahrens nach einem der Ansprüche 1 bis 5 auszuführen, insbesondere wenn die Programmmodule in einen Speicher der Vorrichtung geladen sind.

## Revendications

1. Procédé de découpage laser d'une pièce (10), au moyen d'un dispositif de découpage laser (100 ; 300 ; 400 ; 500) doté d'une tête de découpage (102) ;
comprenant les étapes consistant à
irradier (S1) la pièce (10) avec un faisceau laser d'usinage, découper la pièce (10) dans une direction de découpage (103a) et générer une zone de traitement (12) et en particulier générer une entaille (103) ; et
acquérir (S2) 1 à n images (200; 600) de la zone de traitement (12) dans au moins une partie d'une lumière d'éclairage (305) réfléchie par la zone de traitement (12) et/ou dans au moins une partie d'une lumière de traitement (105) générée par une interaction du faisceau laser d'usinage avec la pièce (10) et émise par la zone de traitement (12) au moyen d'un dispositif d'acquisition d'images (110) ;
**caractérisé en ce que**
chacune des 1 à n images (200 ; 600) est acquise sous la forme d'une mosaïque (210) d'images partielles simultanées T₁ à Tₘ, dans lequel chacune des images partielles T₁ à Tₘ de la mosaïque (210) se distingue par
a. une caractéristique optique d'un angle d'acquisition (B) par rapport à la zone de traitement (12),
et au moins une caractéristique optique choisie parmi
b. une distance focale (f ; fz) d'une optique (111 ; 111a ; 115) du dispositif d'acquisition d'images (110) dans la direction de la zone de traitement (12), et
c. une polarisation de la lumière de traitement acquise (105) et/ou de la lumière d'éclairage acquise (305) ;
et au moins une caractéristique de qualité de découpage est déterminée (S3) à partir de la mosaïque (210) d'images partielles T₁ à Tₘ d'au moins l'une des 1 à n images (200 ; 600) ; les 1 à n images (200 ; 600) sont acquises à l'aide d'au moins un capteur d'intensité de rayonnement (113) du dispositif d'acquisition d'images (110), auquel au moins un moyen optique est ou sera connecté en amont,
le moyen optique étant
- un ensemble de microlentilles (111) disposées côte à côte pour acquérir la lumière d'éclairage réfléchie (305) et/ou la lumière de traitement (105) à partir d'une pluralité d'angles d'acquisition individuels ; ou
- un ensemble de miroirs (115) pour acquérir la lumière d'éclairage réfléchie (305) et/ou la lumière de traitement (105) à partir d'une pluralité d'angles d'acquisition individuels sous de multiples réflexions kaléidoscopiques ; et
au moins un élément choisi parmi
- un ensemble de microlentilles (111) disposées côte à côte pour acquérir la lumière d'éclairage réfléchie (305) et/ou la lumière de traitement (105) à une pluralité de distances focales individuelles; et
- un ensemble de filtres de micropolarisation (411) disposés côte à côte pour acquérir la lumière d'éclairage réfléchie (305) et/ou la lumière de traitement (105) avec une pluralité de polarisations individuelles.

2. Procédé selon la revendication 1,
dans lequel l'ensemble de microlentilles (111) disposées côte à côte, l'ensemble de miroirs (115) pour l'acquisition sous de multiples réflexions kaléidoscopiques et/ou l'ensemble de filtres de micropolarisation (411) disposés côte à côte sont ou seront connectés spatialement en série en amont du capteur d'intensité de rayonnement (113) dans la direction de propagation de la lumière, et/ou
dans lequel l'ensemble de microlentilles (111) disposées côte à côte, l'ensemble de miroirs (115) pour l'acquisition sous de multiples réflexions kaléidoscopiques et/ou l'ensemble de filtres de micropolarisation (411) disposés côte à côte sont ou seront connectés en amont du capteur d'intensité de rayonnement (113) de manière temporellement alternée.

3. Procédé selon l'une quelconque des revendications précédentes,
dans lequel les 1 à n images (200 ; 600) sont acquises avec au moins un capteur d'intensité de rayonnement étalonné en température (113) et la température de rayonnement de la lumière de traitement (105) est identifiée ; et/ou
dans lequel la ou les caractéristiques de qualité de découpage basées sur au moins un élément choisi parmi une géométrie de la zone de traitement (12), en particulier une géométrie de l'entaille, une distribution de température sur et/ou dans la zone de traitement (12), en particulier sur et/ou dans l'entaille (103), une distribution de vitesse d'un bain de fusion dans la zone de traitement (12), en particulier dans l'entaille (103) et/ou le long de l'entaille, et au moins une image différentielle de la géométrie de la zone de traitement (12), en particulier au moins une image différentielle de la géométrie de l'entaille (103), sont déterminées comme des informations 3D contenues dans la mosaïque (210) des images partielles d'au moins une des 1 à n images (200 ; 600).

4. Procédé selon l'une quelconque des revendications précédentes,
dans lequel un faisceau lumineux d'éclairage (305) d'un dispositif d'éclairage est dirigé vers la zone de traitement (12) ; et/ou
dans lequel le faisceau laser d'usinage (106) et le faisceau lumineux d'éclairage (305) sont dirigés coaxialement, en particulier chacun à un angle d'environ 90° par rapport à la surface de la pièce (13), vers la zone de traitement (12) ; et/ou
dans lequel, lors de l'acquisition des 1 à n images (200 ; 600), au moins une partie du faisceau lumineux d'éclairage réfléchi par la zone de traitement (12) et/ou au moins une partie de la lumière de traitement (105) est acquise, qui s'étend dans chaque cas coaxialement par rapport au faisceau laser d'usinage frappant la zone de traitement (12).

5. Procédé selon l'une quelconque des revendications précédentes,
dans lequel des images partielles sont sélectionnées avec un angle d'acquisition (B) dans une plage de 0° à 20°, de préférence entre 0° et 15°, par rapport à la zone de traitement (12) ; et/ou
dans lequel l'ensemble de microlentilles (111) et/ou l'ensemble de miroirs (115) fournissent une pluralité d'angles d'acquisition (B) dans une plage de 0° à 20°, de préférence entre 0° et 15°, par rapport à la zone de traitement (12) ; et/ou
dans lequel des images partielles ayant le même angle d'acquisition, la même distance focale et/ou la même polarisation sont sélectionnées à partir de la mosaïque (210) d'images partielles T₁ à Tₘ d'au moins une des 1 à n images pour déterminer la caractéristique de qualité de découpage ; et/ou
dans lequel la caractéristique de qualité de découpage est déterminée à partir de la mosaïque (210) d'images partielles T₁ à Tₘ d'au moins une des 1 à n images au moyen d'au moins un réseau neuronal (133).

6. Dispositif (100 ; 300 ; 400 ; 500) de découpage laser d'une pièce (10), comprenant en particulier
un procédé de découpage laser d'une pièce (10) selon l'une quelconque des revendications précédentes,
en particulier de génération d'une entaille (103) ;
doté d'une tête de découpage (102) ;
dans lequel la tête de découpage comprend
- une première interface (104) destinée à une source laser pour générer un faisceau laser d'usinage (106) ; et
- une ouverture de sortie (108) pour le faisceau laser d'usinage ;
et le dispositif de découpage laser (100 ; 300 ; 400 ; 500) d'une pièce comprend en outre
- un dispositif d'acquisition d'images (110) destiné à acquérir 1 à n images (200 ; 600) de la zone de traitement (12), en particulier de l'entaille (103), dans au moins une partie d'une lumière d'éclairage (305) réfléchie par la zone de traitement (12) à travers l'ouverture de sortie (108) et/ou dans au moins une partie d'une lumière de traitement (105) générée par une interaction du faisceau laser d'usinage avec la pièce (10) et émise par la zone de traitement (12) à travers l'ouverture de sortie (108) ; et
- une optique de faisceau lumineux (120) disposée au moins partiellement dans la tête de découpage et ayant un dispositif (122 ; 306) destiné à diriger le faisceau laser d'usinage dans la direction de l'ouverture de sortie (108) et à diriger au moins une partie de la lumière d'éclairage (305) réfléchie par l'ouverture de sortie et/ou au moins une partie de la lumière de traitement (105) émise à travers l'ouverture de sortie (108) vers le dispositif d'acquisition d'images (110) ;
**caractérisé en ce que**
le dispositif d'acquisition d'images (110) est conçu pour acquérir chacune des 1 à n images (200 ; 600) sous la forme d'une mosaïque (210) d'images partielles simultanées T₁ à Tₘ, dans lequel chacune des images partielles T₁ à Tₘ de la mosaïque (210) se distingue par
a. une caractéristique optique d'un angle d'acquisition (B) par rapport à la zone de traitement (12),
et au moins une caractéristique optique choisie parmi
b. une distance focale (f ; fz) d'une optique (111 ; 111a ; 115) du dispositif d'acquisition d'images (110) dans la direction de la zone de traitement (12), et
c. une polarisation de la lumière de traitement acquise (105) et/ou de la lumière d'éclairage acquise (305) ;
et une unité de détermination (132) destinée à déterminer au moins une caractéristique de qualité de découpage à partir de la mosaïque (210) d'images partielles T₁ à Tₘ d'au moins une des 1 à n images (200 ; 600) est prévue ;
dans lequel le dispositif d'acquisition d'images (110) possède au moins un capteur d'intensité de rayonnement (113) destiné à acquérir les 1 à n images (200 ; 600), auquel au moins un moyen optique est ou peut être connecté en amont,
le moyen optique étant
- un ensemble de microlentilles (111) disposées côte à côte pour acquérir la lumière d'éclairage réfléchie (305) et/ou la lumière de traitement (105) à partir d'une pluralité d'angles d'acquisition individuels ; ou
- un ensemble de miroirs (115) pour acquérir la lumière d'éclairage réfléchie (305) et/ou la lumière de traitement (105) à partir d'une pluralité d'angles d'acquisition individuels sous de multiples réflexions kaléidoscopiques ; et
au moins un élément choisi parmi
- un ensemble de microlentilles (111) disposées côte à côte pour acquérir la lumière d'éclairage réfléchie (305) et/ou la lumière de traitement (105) à une pluralité de distances focales individuelles ; et
- un ensemble de filtres de micropolarisation (411) disposés côte à côte pour acquérir la lumière d'éclairage réfléchie (305) et/ou la lumière de traitement (105) avec une pluralité de polarisations individuelles.

7. Dispositif selon la revendication 6,
dans lequel la tête de découpage possède une seconde interface (302) pour une source de lumière d'éclairage (304) destinée à générer un faisceau lumineux d'éclairage (305), en particulier un faisceau laser d'éclairage ; et/ou
dans lequel l'optique de faisceau lumineux (120) possède un dispositif (306) destiné à diriger le faisceau lumineux d'éclairage (305) dans la direction de l'ouverture de sortie (108).

8. Dispositif selon l'une quelconque des revendications 6 à 7,
dans lequel l'ensemble de microlentilles (111) disposées côte à côte, l'ensemble de miroirs (115) pour l'acquisition sous de multiples réflexions kaléidoscopiques et/ou l'ensemble de filtres de micropolarisation (411) disposés côte à côte sont ou seront connectés spatialement en série en amont du capteur d'intensité de rayonnement (113), et/ou
dans lequel l'ensemble de microlentilles (111) disposées côte à côte, l'ensemble de miroirs (115) pour l'acquisition sous de multiples réflexions kaléidoscopiques et/ou l'ensemble de filtres de micropolarisation (411) disposés côte à côte peuvent être connectés en amont du capteur d'intensité de rayonnement (113) de manière temporellement alternée.

9. Dispositif selon l'une quelconque des revendications 6 à 8,
dans lequel le ou les capteurs d'intensité de rayonnement (113) sont étalonnés en température et une unité d'identification (134) est prévue pour identifier la température de rayonnement de la lumière de traitement (105) ; et/ou
dans lequel l'unité de détermination est conçue pour déterminer au moins une caractéristique de qualité de découpage sur la base d'au moins un élément choisi parmi une géométrie de la zone de traitement (12), en particulier une géométrie de l'entaille (103), une distribution de température sur et/ou dans la zone de traitement (12), en particulier sur et/ou dans l'entaille (103), une distribution de vitesse d'un bain de fusion dans la zone de traitement (12), en particulier dans l'entaille (103) et/ou le long de l'entaille, et au moins une image différentielle de la géométrie de la zone de traitement (12), en particulier au moins une image différentielle de la géométrie de l'entaille (103), comme des informations 3D contenues dans la mosaïque (210) des images partielles d'au moins une des 1 à n images (200 ; 600) ;
et/ou
dans lequel le dispositif d'acquisition d'images (110) comporte au moins un élément choisi parmi une caméra qui acquiert la lumière d'éclairage réfléchie et/ou la lumière de traitement à partir d'une pluralité d'angles d'acquisition individuels et/ou avec une pluralité de longueurs focales individuelles, et une caméra de polarisation.

10. Dispositif selon l'une quelconque des revendications 6 à 9,
dans lequel une source laser (109) destinée à générer un faisceau laser d'usinage (106) d'une puissance d'au moins 1 kW, de préférence d'au moins 6 kW, est disposée au niveau de la première interface (104) ; et/ou
dans lequel la tête de découpage (102) est pourvue d'au moins une autre interface (302) ; et/ou
dans lequel au moins un élément choisi parmi une partie de l'optique de faisceau lumineux (120), la source de lumière d'éclairage (304) destinée à générer le faisceau lumineux d'éclairage (305), en particulier un faisceau laser d'éclairage, et le dispositif d'acquisition d'images (110) est connecté à la seconde interface (302) et/ou à l'au moins une autre interface (302) de la tête de découpage ; et/ou
dans lequel l'optique de faisceau lumineux (120) est conçue pour diriger coaxialement le faisceau laser d'usinage (106) et le faisceau lumineux d'éclairage vers la zone de traitement (12), en particulier à un angle d'environ 90° par rapport à la surface de la pièce ; et/ou
dans lequel l'optique de faisceau lumineux (120) est conçue pour guider au moins une partie de la lumière d'éclairage (305) réfléchie par la zone de traitement (12) à travers l'ouverture de sortie (108) et/ou au moins une partie de la lumière de traitement (105) émise par la zone de traitement (12) à travers l'ouverture de sortie, qui s'étend dans chaque cas coaxialement par rapport au faisceau laser d'usinage frappant la zone de traitement (12), vers le dispositif d'acquisition d'images (110).

11. Dispositif selon l'une quelconque des revendications 6 à 10,
dans lequel l'unité de détermination (132) est conçue pour sélectionner des images partielles avec un angle d'acquisition dans une plage de 0° à 20°, de préférence entre 0° et 15°, par rapport à la zone de traitement (12) ; et/ou
dans lequel l'ensemble de microlentilles (111) et/ou l'ensemble de miroirs (115) sont conçus pour fournir une pluralité d'angles d'acquisition dans une plage de 0° à 20°, de préférence entre 0° et 15°, par rapport à la zone de traitement (12) ; et/ou
dans lequel l'unité de détermination (132) est conçue pour sélectionner des images partielles ayant le même angle d'acquisition, la même distance focale et/ou la même polarisation à partir de la mosaïque (210) d'images partielles T₁ à Tₘ d'au moins une des 1 à n images (200 ; 600) pour déterminer la caractéristique de qualité de découpage ; et/ou dans lequel l'unité de détermination (132) comporte au moins un réseau neuronal (133) pour déterminer la caractéristique de qualité de découpage à partir de la mosaïque (210) d'images partielles T₁ à Tₘ à partir d'au moins une des 1 à n images (200 ; 600).

12. Dispositif selon l'une quelconque des revendications 6 à 11,
ayant un dispositif de commande (130) qui contient l'unité de détermination (132) et/ou l'unité d'identification (134), en particulier dans chaque cas sous forme de module de programme.

13. Produit de programme d'ordinateur contenant un ou plusieurs modules de programme, qui amènent le dispositif selon l'une quelconque des revendications 6 à 12 à réaliser les étapes du procédé selon l'une quelconque des revendications 1 à 5, en particulier lorsque les modules de programme sont chargés dans une mémoire du dispositif.
